(19) Europäisches Patentamt / European Patent Office / Office européen des brevets

(11) **EP 3 697 049 A1**

(12) **EUROPEAN PATENT APPLICATION**
published in accordance with Art. 153(4) EPC

(43) Date of publication:
**19.08.2020 Bulletin 2020/34**

(51) Int Cl.:
***H04L 27/26*** (2006.01)      ***H04W 72/04*** (2009.01)

(21) Application number: **18865438.8**

(22) Date of filing: **11.10.2018**

(86) International application number:
**PCT/CN2018/109875**

(87) International publication number:
**WO 2019/072211 (18.04.2019 Gazette 2019/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.10.2017  CN 201710942526**

(71) Applicant: **ZTE Corporation**
**Shenzhen, Guangdong 518057 (CN)**

(72) Inventors:
• **XIA, Shuqiang**
  **Shenzhen**
  **Guangdong 518057 (CN)**

• **LIANG, Chunli**
  **Shenzhen**
  **Guangdong 518057 (CN)**
• **ZUO, Zhisong**
  **Shenzhen**
  **Guangdong 518057 (CN)**
• **HAN, Xianghui**
  **Shenzhen**
  **Guangdong 518057 (CN)**
• **REN, Min**
  **Shenzhen**
  **Guangdong 518057 (CN)**

(74) Representative: **Tiburzi, Andrea et al**
**Barzanò & Zanardo Roma S.p.A.**
**Via Piemonte 26**
**00187 Roma (IT)**

(54) **SIGNAL SENDING METHOD AND APPARATUS**

(57)    Disclosed are a signal sending method and apparatus. The method includes: determining hybrid automatic repeat request-acknowledgement (HARQ-ACK) information to be fed back; and sending the HARQ-ACK information and a reference signal corresponding to the HARQ-ACK information on L subcarriers of K symbols, where K≥2 and L≥12.

Determine hybrid automatic repeat request-acknowledgement (HARQ-ACK) information to be fed back — S102

Send the HARQ-ACK information and a reference signal corresponding to the HARQ-ACK information on L subcarriers of K symbols — S104

**FIG. 1**

EP 3 697 049 A1

**Description**

This application claims priority to Chinese patent application No. 201710942526.5 filed on October 11, 2017, disclosure of which is incorporated herein by reference in its entirety.

**TECHNICAL FIELD**

The present application relates to the field of communications, for example, to a signal sending method and apparatus.

**BACKGROUND**

At present, the 4th Generation mobile communication technology (4G) Long-Term Evolution (LTE)/Long-Term Evolution Advanced (LTE-Advanced/LTE-A) and the 5th Generation mobile communication technology (5G) are facing increasing requirements. From the current development trend, both 4G and 5G systems are studying the characteristics which support enhanced mobile broadband (eMBB), ultra-reliable and low-latency communication (URLLC) and massive connections.

In a new radio (NR) technology, a short physical uplink control channel (PUCCH) has already agreed to use a sequence-based form to carry at most two bits of control information. The short physical uplink control channel (PUCCH) lasts for a relatively short time period, which imposes new requirements on a corresponding sequence design. Therefore, it becomes an urgent problem to be solved to provide a new sequence design to be at least used for sending uplink control information based on the short physical uplink control channel.

In view of the above problem in the related art, no effective solution has yet been proposed.

**SUMMARY**

Embodiments of the present application provide a signal sending method and apparatus to solve at least the problem in the related art of a failure to send uplink control information based on a short sequence.

An embodiment of the present application provides a signal sending method. The method includes: determining hybrid automatic repeat request-acknowledgement (HARQ-ACK) information to be fed back; and sending the HARQ-ACK information and a reference signal corresponding to the HARQ-ACK information on L subcarriers of K symbols, where $K \geq 2$ and $L \geq 12$.

An embodiment of the present application provides another signal sending method. The method includes: determining hybrid automatic repeat request-acknowledgement (HARQ-ACK) information to be fed back; and in response to a number of pieces of HARQ-ACK information being not greater than 2, sending at least one sequence with a length of M on M subcarriers of K symbols, where $K \geq 1$, $M \geq 12$, and M values of the sequence are mapped onto the M subcarriers.

Another embodiment of the present application provides a signal sending apparatus including a determining module and a sending module. The determining module is configured to determine hybrid automatic repeat request-acknowledgement (HARQ-ACK) information to be fed back. The sending module is configured to send the HARQ-ACK information and a reference signal corresponding to the HARQ-ACK information on L subcarriers of K symbols, where $K \geq 2$ and $L \geq 12$.

Another embodiment of the present application provides another signal sending apparatus including a determining module and a sending module. The determining module is configured to determine hybrid automatic repeat request-acknowledgement (HARQ-ACK) information to be fed back. The sending module is configured to: in response to a number of pieces of HARQ-ACK information being not greater than 2, send at least one sequence with a length of M on M subcarriers of K symbols, where $K \geq 1$, $M \geq 12$, and M values of the sequence are mapped onto the M subcarriers.

Another embodiment of the present application further provides a storage medium. The storage medium is configured to store program codes for performing the following steps: determining hybrid automatic repeat request-acknowledgement (HARQ-ACK) information to be fed back; and sending the HARQ-ACK information and a reference signal corresponding to the HARQ-ACK information on L subcarriers of K symbols, where $K \geq 2$ and $L \geq 12$.

**BRIEF DESCRIPTION OF DRAWINGS**

The drawings described herein are used to provide a further understanding of the present application and form a part of the present application. The exemplary embodiments and descriptions thereof in the present application are used to explain the present application and not to limit the present application in any improper way. In the drawings:

FIG. 1 is a flowchart of a signal sending method according to an embodiment of the present application;

FIG. 2 is a flowchart of another signal sending method according to an embodiment of the present application;

FIG. 3 is a block diagram of a signal sending apparatus according to an embodiment of the present application;

FIG. 4 is a block diagram of another signal sending apparatus according to an embodiment of the present application;

FIG. 5 illustrates a signal sending method according to specific embodiment one of the present application;

FIG. 6 is a diagram of a probability density distribution in an embodiment of the present application;

FIG. 7 is a diagram of a probability distribution of max cross-correlation values of sequences in an embodiment of the present application; and

FIG. 8 illustrates a signal sending method according to specific embodiment two of the present application.

**DETAILED DESCRIPTION**

The present application will be described hereinafter in detail with reference to the drawings and in conjunction with embodiments. It is to be noted that if not in collision, the embodiments and features therein in the present application may be combined with each other.
It is to be noted that the terms "first", "second" and the like in the description, claims and drawings of the present application are used to distinguish between similar objects and are not necessarily used to describe a particular order or sequence.

Embodiment one

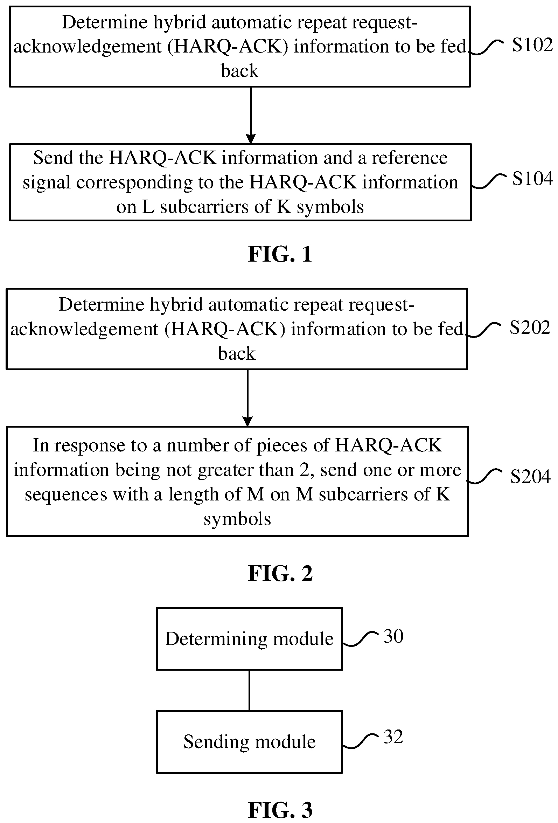

Network architecture in the embodiment of the present application includes a terminal and a base station, where the terminal interacts with the base station.
This embodiment provides a signal sending method. FIG. 1 is a flowchart of a signal sending method according to an embodiment of the present application. As shown in FIG. 1, the method includes step S102 and step S104.
In step S102, hybrid automatic repeat request-acknowledgement (HARQ-ACK) information to be fed back is determined.
In step S104, the HARQ-ACK information and a reference signal corresponding to the HARQ-ACK information are sent on L subcarriers of K symbols, where $K \geq 2$ and $L \geq 12$.
By the above steps, the present application solves the problem in the related art of a failure to send uplink control information based on a short sequence, has advantages of a low peak-to-average power ratio (PAPR), a small cubic metric (CM) and high power amplification efficiency, and has a characteristic of low mutual interference in consideration of its coexistence with LTE.
In an embodiment, the above steps may, but may not necessarily, be executed by the terminal, such as a mobile phone.
In an embodiment, the step of sending the reference signal corresponding to the HARQ-ACK information on the L subcarriers of the K symbols includes: sending the reference signal corresponding to the HARQ-ACK information on M subcarriers of one or more of the K symbols, where $M \geq 12$. In an embodiment, M=12.
In an embodiment, the K symbols include a first symbol for sending the reference signal and a second symbol for sending the HARQ-ACK information.
In an embodiment, the step of sending the reference signal corresponding to the HARQ-ACK information on a predetermined number of subcarriers of at least one of the K symbols includes: sending, by a sequence with a length of M, the reference signal corresponding to the HARQ-ACK information on the M subcarriers of at least one of the K symbols, where M values of the sequence are mapped onto the M subcarriers.
In an embodiment, the sequence is a subset of a specified sequence set, where sequences in the specified sequence set satisfy at least one of the following conditions: different cyclic shifts of each sequence are orthogonal; a cubic metric (CM) of each sequence does not exceed a first preset threshold; a peak-to-average power ratio (PAPR) of each sequence does not exceed a second preset threshold; a cross-correlation between any two sequences does not exceed a third preset threshold; or a cross-correlation between any one sequence and a sequence with a length of 12 in an LTE system in the related art does not exceed a fourth preset threshold.
In an embodiment, the sequence $x_u(n)$ satisfies the following condition:

$$x_u(n) = \exp\left( j\frac{\pi.\varphi(n)}{4} \right)$$

where u is a sequence index, u is an integer and u∈{0,1,2,...29}, $\varphi(n)$ is an element value of the sequence, n is an element index, n=0, 1, 2, ..., 11, and a value of u has a corresponding relation with a value of $\varphi(n)$.

It is to be noted that a corresponding relation between u and $\varphi(n)$ in the embodiment of the present application does not constitute a limitation to the present application. u is the sequence index for distinguishing between different sequences, and the corresponding relation between u and $\varphi(n)$ is not limited to those shown in table 1. For example, in table 1, $\varphi(n)$ corresponding to u = 0 is [1 1 -3 3 -3 -1 1 -3 -3 -3 3 -3], and $\varphi(n)$ corresponding to u = 1 is [1 1 -3 3 -1 -3 -1 -3 -3 3 -3 -1]. In fact, that $\varphi(n)$ corresponding to u = 0 is [1 1 -3 3 -1 -3 -1 -3 -3 3 -3 1], and $\varphi(n)$ corresponding to u = 1 is [1 1 -3 3 -3 -1 1 -3 -3 -3 3 -3] also falls within the scope of the present application. The same is done for all the remaining forms in the present application, and repeated descriptions will not be made later.

In an embodiment, the value of u and the value of $\varphi(n)$ are values listed in any one of tables 1 to 3 or are cyclic shifts of each row as listed in any one of tables 1 to 3:

Table 1

| u | $\varphi(n)$ | | | | | | | | | | | |
|---|---|---|---|---|---|---|---|---|---|---|---|---|
| 0 | 1 | 1 | -3 | 3 | -3 | -1 | 1 | -3 | -3 | -3 | 3 | -3 |
| 1 | 1 | 1 | -3 | 3 | -1 | -3 | -1 | -3 | -3 | 3 | -3 | -1 |
| 2 | 1 | -3 | 3 | 1 | -1 | 1 | 3 | 1 | 1 | 1 | -3 | -1 |
| 3 | 1 | -3 | 3 | 3 | -1 | -1 | 3 | -3 | -3 | 3 | -3 | 3 |
| 4 | 1 | 3 | 3 | 1 | 3 | -3 | 3 | 1 | 1 | 3 | -1 | -3 |
| 5 | 1 | -3 | 3 | -1 | 1 | -3 | -3 | 3 | 3 | 3 | 3 | -3 |
| 6 | 1 | 1 | 3 | 3 | -1 | -3 | -3 | 3 | 3 | -3 | 1 | -3 |
| 7 | 1 | -3 | -1 | -3 | 3 | -1 | -3 | -1 | -1 | -1 | 3 | -3 |
| 8 | 1 | 3 | -3 | -1 | -3 | 1 | -1 | -3 | -3 | 3 | -3 | 3 |
| 9 | 1 | -1 | -1 | -1 | 1 | -3 | 3 | -1 | -1 | 3 | -3 | 1 |
| 10 | 1 | -1 | 3 | -3 | -3 | -3 | 1 | -3 | -3 | 3 | 3 | -1 |
| 11 | 1 | -1 | 1 | 1 | 3 | -3 | 1 | -3 | -3 | 3 | 3 | 1 |
| 12 | 1 | -1 | 1 | 1 | -1 | 1 | -3 | 3 | 3 | -1 | -1 | 1 |
| 13 | 1 | -3 | -1 | -3 | -1 | -1 | -3 | 1 | 1 | 3 | -1 | -1 |
| 14 | 1 | -3 | 3 | -1 | 1 | -3 | -1 | -1 | -1 | -1 | -3 | 3 |
| 15 | 1 | -1 | -3 | 1 | 3 | 1 | 3 | 3 | 3 | -1 | 1 | 3 |
| 16 | 1 | -3 | -1 | 3 | 3 | 1 | 1 | 3 | 3 | -1 | -3 | 1 |
| 17 | 1 | -3 | 1 | 3 | -3 | -3 | 3 | 3 | 3 | 1 | -1 | 3 |
| 18 | 1 | 3 | -3 | 3 | 1 | -3 | -3 | -3 | -3 | 1 | 3 | 1 |
| 19 | 1 | -1 | -3 | -3 | 1 | 1 | 3 | 1 | 1 | 3 | -1 | 3 |
| 20 | 1 | 3 | -3 | -1 | 1 | -1 | 3 | 3 | 3 | 3 | 1 | -3 |
| 21 | 1 | -1 | 3 | -1 | 3 | 3 | 1 | 1 | 1 | 3 | -3 | -1 |
| 22 | 1 | 1 | 1 | -3 | -3 | 3 | -1 | 3 | 3 | -3 | 1 | -3 |
| 23 | 1 | 3 | -1 | 3 | 1 | -3 | -3 | 1 | 1 | 1 | 1 | -3 |
| 24 | 1 | 3 | 1 | 3 | -1 | -3 | 3 | -1 | -1 | 3 | -3 | -3 |
| 25 | 1 | -3 | 3 | -3 | -3 | -3 | 3 | 1 | 1 | -3 | -1 | 1 |

(continued)

| u | φ(n) | | | | | | | | | | | |
|---|---|---|---|---|---|---|---|---|---|---|---|---|
| 26 | 1 | -3 | 3 | 3 | -1 | 3 | -1 | 1 | 1 | -3 | -1 | -1 |
| 27 | 1 | 1 | -3 | -3 | -1 | -1 | -3 | -1 | -1 | 3 | -1 | 3 |
| 28 | 1 | 3 | 3 | -1 | 1 | -1 | 1 | -1 | -1 | 3 | 1 | 1 |
| 29 | 1 | -3 | 3 | -1 | -3 | -1 | 1 | 1 | 1 | -1 | -1 | 3 |

Table 2

| u | φ(n) | | | | | | | | | | | |
|---|---|---|---|---|---|---|---|---|---|---|---|---|
| 0 | 1 | -3 | -1 | -1 | 1 | -3 | -3 | -3 | -3 | 1 | -1 | -1 |
| 1 | 1 | 3 | -3 | -3 | -3 | -1 | 3 | -1 | -1 | -3 | 3 | -1 |
| 2 | 1 | 3 | -3 | -1 | 3 | 1 | -1 | -3 | -3 | 3 | -3 | 3 |
| 3 | 1 | -3 | 3 | -1 | 3 | 3 | 3 | 1 | 1 | -1 | 1 | 3 |
| 4 | 1 | 3 | 1 | 3 | -1 | 1 | 3 | -3 | -3 | 3 | 1 | -1 |
| 5 | 1 | 3 | -3 | 1 | -1 | 1 | -1 | -1 | -1 | 3 | 1 | 1 |
| 6 | 1 | -1 | -1 | -3 | -3 | -1 | 3 | -1 | -1 | 1 | 1 | 3 |
| 7 | 1 | -3 | -1 | 3 | 3 | 3 | 3 | 3 | 3 | -1 | -3 | 1 |
| 8 | 1 | 3 | -3 | -1 | 3 | 1 | 3 | 1 | 1 | -1 | 3 | 1 |
| 9 | 1 | -1 | -3 | -3 | -1 | -3 | 1 | 3 | 3 | -1 | 3 | -3 |
| 10 | 1 | -3 | -1 | 1 | -1 | -3 | 1 | 1 | 1 | -1 | -3 | -1 |
| 11 | 1 | 1 | 3 | -3 | 3 | 3 | -3 | 1 | 1 | -1 | 3 | -1 |
| 12 | 1 | 1 | 1 | 1 | -1 | 1 | -3 | 3 | 3 | -1 | -1 | 3 |
| 13 | 1 | -3 | 1 | -1 | -3 | 1 | 1 | -1 | -1 | -1 | 1 | 3 |
| 14 | 1 | -3 | -1 | 3 | -1 | -1 | -1 | 1 | 1 | 3 | 1 | -1 |
| 15 | 1 | -3 | 1 | -1 | -1 | 3 | -3 | 1 | 1 | 3 | 3 | 3 |
| 16 | 1 | -3 | -3 | -3 | -1 | 1 | 3 | 1 | 1 | 1 | -3 | 1 |
| 17 | 1 | -3 | 3 | 1 | 3 | -3 | 1 | 1 | 1 | 3 | -3 | 3 |
| 18 | 1 | 3 | -3 | -1 | -1 | -3 | 1 | -1 | -1 | -1 | -3 | 1 |
| 19 | 1 | -1 | -3 | 3 | 3 | -3 | 1 | 3 | 3 | 3 | -3 | 1 |
| 20 | 1 | 1 | -1 | -1 | -1 | 3 | 1 | -3 | -3 | 1 | -3 | -1 |
| 21 | 1 | -3 | 3 | -3 | -1 | -1 | 3 | -1 | -1 | -3 | -3 | -3 |
| 22 | 1 | -1 | -3 | -1 | 3 | -3 | -1 | 1 | 1 | 1 | 3 | 1 |
| 23 | 1 | 3 | 1 | 3 | -3 | -1 | -1 | -3 | -3 | 3 | -1 | -3 |
| 24 | 1 | 3 | -1 | -1 | 3 | -1 | -3 | 3 | 3 | -3 | -3 | -3 |
| 25 | 1 | -3 | -1 | 3 | -1 | 3 | 1 | -1 | -1 | -1 | 1 | 1 |
| 26 | 1 | -3 | 3 | -1 | 1 | -3 | -3 | 3 | 3 | 3 | 3 | -3 |
| 27 | 1 | -3 | -3 | -3 | 3 | 1 | -1 | 1 | 1 | 1 | -3 | 1 |
| 28 | 1 | -3 | -3 | 3 | -1 | -1 | 1 | 3 | 3 | 1 | 3 | 1 |
| 29 | 1 | 3 | -3 | 3 | -1 | -3 | 3 | 1 | 1 | 1 | -1 | 1 |

Table 3

| u | $\varphi(n)$ | | | | | | | | | | | |
|---|---|---|---|---|---|---|---|---|---|---|---|---|
| 0 | 1 | -1 | 3 | 1 | 1 | -1 | -1 | -1 | 1 | 3 | -3 | 1 |
| 1 | -1 | -1 | -1 | -1 | 1 | -3 | -1 | 3 | 3 | -1 | -3 | 1 |
| 2 | 1 | -1 | -1 | -3 | -3 | 1 | -3 | 3 | 3 | -3 | -3 | -1 |
| 3 | 1 | 3 | -3 | 1 | -1 | 1 | -1 | -1 | -1 | 3 | 1 | 1 |
| 4 | -3 | 1 | 3 | -1 | -1 | -3 | -3 | -1 | -1 | 3 | 1 | -3 |
| 5 | -1 | 1 | 1 | -1 | 1 | 3 | 3 | -1 | -1 | -3 | 1 | -3 |
| 6 | -3 | -3 | -1 | 3 | 3 | 3 | -3 | 3 | -3 | 1 | -1 | -3 |
| 7 | -3 | 3 | -3 | 3 | 3 | -3 | -1 | -1 | 3 | 3 | 1 | -3 |
| 8 | -3 | -1 | -3 | -1 | -1 | -3 | 3 | 3 | -1 | -1 | 1 | -3 |
| 9 | -3 | 3 | 3 | 3 | -1 | -3 | -3 | -1 | -3 | 1 | 3 | -3 |
| 10 | 1 | 3 | -3 | 1 | 3 | 3 | 3 | 1 | -1 | 1 | -1 | 3 |
| 11 | -1 | -3 | 3 | -1 | -3 | -3 | -3 | -1 | 1 | -1 | 1 | -3 |
| 12 | 3 | 1 | 3 | 1 | 3 | -3 | -1 | 1 | 3 | 1 | -1 | -3 |
| 13 | -3 | -3 | 3 | 3 | 3 | -3 | -1 | 1 | -3 | 3 | 1 | -3 |
| 14 | -3 | -1 | 1 | -3 | 1 | 3 | 3 | 3 | -1 | -3 | 3 | 3 |
| 15 | -3 | -3 | 3 | 1 | -3 | -3 | -3 | -1 | 3 | -1 | 1 | 3 |
| 16 | -1 | 1 | 3 | -3 | 1 | -1 | 1 | -1 | -1 | -3 | 1 | -1 |
| 17 | -3 | -1 | -1 | 1 | 3 | 1 | 1 | -1 | 1 | -1 | -3 | 1 |
| 18 | -3 | -1 | 3 | -3 | -3 | -1 | -3 | 1 | -1 | -3 | 3 | 3 |
| 19 | -3 | -3 | 3 | -3 | -1 | 3 | 3 | 3 | -1 | -3 | 1 | -3 |
| 20 | -3 | 1 | -1 | -1 | 3 | 3 | -3 | -1 | -1 | -3 | -1 | -3 |
| 21 | -3 | 1 | 3 | 3 | -1 | -1 | -3 | 3 | 3 | -3 | 3 | -3 |
| 22 | -3 | -1 | -1 | -3 | -3 | -1 | -3 | 3 | 1 | 3 | -1 | -3 |
| 23 | -3 | -1 | 3 | 1 | -3 | -1 | -3 | 3 | 1 | 3 | 3 | 1 |
| 24 | -3 | 3 | 3 | 1 | -3 | 3 | -1 | 1 | 3 | -3 | 3 | -3 |
| 25 | 3 | -1 | -3 | 3 | -3 | -1 | 3 | 3 | 3 | -3 | -1 | -3 |
| 26 | 1 | -1 | 3 | -1 | -1 | -1 | -3 | -1 | 1 | 1 | 1 | -3 |
| 27 | -3 | 3 | 1 | -3 | 1 | 3 | -1 | -1 | 1 | 3 | 3 | 3 |
| 28 | -3 | 3 | -3 | 3 | -3 | -3 | 3 | -1 | -1 | 1 | 3 | -3 |
| 29 | -3 | 3 | 1 | -1 | 3 | 3 | -3 | 1 | -1 | 1 | -1 | 1 |

In an embodiment, for tables 1 to 3, the peak-to-average power ratio (PAPR), the cubic metric (CM), the cross-correlation between sequences and the cross-correlation with the sequence with a length of 12 in the LTE system satisfy the conditions listed in table 4.

Table 4

|  | Max | Mean | Min | Max | Mean | Min | Max | Mean | Min | Max | Mean | Min |
|---|---|---|---|---|---|---|---|---|---|---|---|---|
| Table 1 | 0.8013 | 0.6773 | 0.2804 | 3.7934 | 3.2454 | 2.5194 | 0.7482 | 0.5757 | 0.4118 | 0.7995 | 0.5767 | 0.4095 |
| Table 2 | 0.7756 | 0.5831 | 0.2804 | 2.7977 | 2.6685 | 2.3486 | 0.6798 | 0.5624 | 0.4244 | 0.8143 | 0.5806 | 0.3777 |
| Table 3 | 0.6759 | 0.5130 | 0.2307 | 2.7959 | 2.6231 | 2.4072 | 0.7995 | 0.5767 | 0.4095 | 0.8143 | 0.5805 | 0.3777 |

In an embodiment, a cyclic shift of the sequence is

$$y_u(n,\alpha) = x_u(n) \cdot \exp\left( j\frac{2\pi\alpha}{M}n \right)$$

where $\alpha$ denotes a cyclic shift amount and $\alpha \in \{0,1,2,...,11\}$, and M is a length of the sequence.

In an embodiment, the value of u and a value of the cyclic shift of the sequence are determined according to a signaling indication of the base station.

This embodiment provides another signal sending method. FIG. 2 is a flowchart of another signal sending method according to an embodiment of the present application. As shown in FIG. 2, the method includes step S202 and step S204.

In step S202, hybrid automatic repeat request-acknowledgement (HARQ-ACK) information to be fed back is determined.

In step S204, in response to a number of pieces of HARQ-ACK information being not greater than 2, at least one sequence with a length of M is sent on M subcarriers of K symbols.

K≥1, M≥12, and M values of the sequence are mapped onto the M subcarriers. In an embodiment, M=12.

In an embodiment, the above steps may, but may not necessarily, be executed by a terminal, such as a mobile phone.

In an embodiment, the sequence is a subset of a specified sequence set, where sequences in the specified sequence set satisfy at least one of the following conditions: different cyclic shifts of each sequence are orthogonal; a cubic metric (CM) of each sequence does not exceed a first preset threshold; a peak-to-average power ratio (PAPR) of each sequence does not exceed a second preset threshold; a cross-correlation between any two sequences does not exceed a third preset threshold; or a cross-correlation between any one sequence and a sequence with a length of 12 in an LTE system in the related art does not exceed a fourth preset threshold.

In an embodiment, the sequence $x_u(n)$ satisfies the following condition:

$$x_u(n) = \exp\left( j\frac{\pi.\varphi(n)}{4} \right)$$

wherein u is a sequence index, u is an integer and $u \in \{0,1,2....29\}$, $\varphi(n)$ is an element value of the sequence, n is an element index, n=0, 1, 2, ..., 11, and a value of u has a corresponding relation with a value of $\varphi(n)$.

In an embodiment, the value of u and the value of $\varphi(n)$ are values listed in any one of tables 1 to 3 or are cyclic shifts of each row listed in any one of tables 1 to 3.

In an embodiment, a cyclic shift of the sequence is

$$y_u(n,\alpha) = x_u(n) \cdot \exp\left( j\frac{2\pi\alpha}{M}n \right)$$

where $\alpha$ denotes a cyclic shift amount and $\alpha \in \{0,1,2,...,11\}$.

In this embodiment, the HARQ-ACK information has a corresponding relation with at least one of: an index of the sequence, a value of the cyclic shift of the sequence or frequency domain positions of the M subcarriers.

From the description of the embodiments described above, it will be apparent to those skilled in the art that the methods in the embodiments described above may be implemented by software plus a necessary general-purpose hardware platform, or may of course be implemented by hardware. However, in many cases, the former is a preferred implementation manner. Based on such an understanding, the solutions of the present application substantially, or the part contributing to the related art, may be embodied in the form of a software product. The computer software product is stored on a storage medium (such as a read-only memory (ROM)/random access memory (RAM), a magnetic disk or an optical disk) and includes several instructions for enabling a terminal device (which may be a mobile phone, a computer, a server or a network device) to perform the methods according to multiple embodiments of the present application.

Embodiment two

This embodiment further provides a signal sending apparatus. The apparatus is configured to implement the above-mentioned embodiments and preferred implementation manners. What has been described will not be repeated.

As used below, the term "module" may be at least one of software or hardware capable of implementing predetermined functions. The apparatus in the embodiment described below is preferably implemented by software, but implementation by hardware or by a combination of software and hardware is also possible and conceivable.

FIG. 3 is a block diagram of a signal sending apparatus according to an embodiment of the present application. As shown in FIG. 3, the apparatus includes a determining module 30 and a sending module 32.

The determining module 30 is configured to determine hybrid automatic repeat request-acknowledgement (HARQ-ACK) information to be fed back.

The sending module 32 is configured to send the HARQ-ACK information and a reference signal corresponding to the HARQ-ACK information on L subcarriers of K symbols, where $K \geq 2$ and $L \geq 12$.

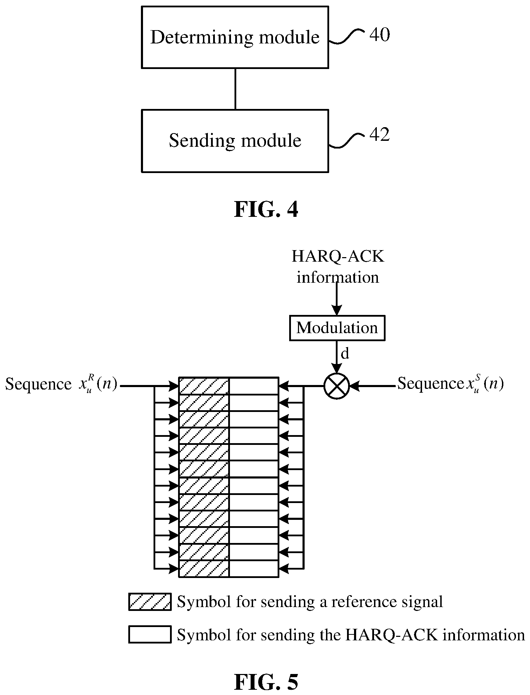

FIG. 4 is a block diagram of another signal sending apparatus according to an embodiment of the present application. As shown in FIG. 4, the apparatus includes a determining module 40 and a sending module 42.

The determining module 40 is configured to determine hybrid automatic repeat request-acknowledgement (HARQ-ACK) information to be fed back.

The sending module 42 is configured to: in response to a number of pieces of HARQ-ACK information being not greater than 2, send at least one sequence with a length of M on M subcarriers of K symbols, where $K \geq 1$, $M \geq 12$, and M values of the sequence are mapped onto the M subcarriers.

In an embodiment, the above-mentioned various modules may be implemented by software or hardware. Implementation by hardware may, but may not necessarily, be performed in the following manner: the above-mentioned various modules are located in the same processor or located in different processors in any combination form.

Embodiment three

This embodiment is an optional embodiment of the present application and used for describing the present application in detail in conjunction with specific implementation manners.

This embodiment includes scheme 1 and scheme 2.

Scheme 1

A terminal determines HARQ information required to be fed back according to received data. The terminal sends the HARQ information and a reference signal corresponding to the HARQ-ACK information on L ($L \geq 12$) subcarriers of K ($K \geq 2$) symbols. The reference signal is sent on 12 subcarriers of at least one of the K symbols (a symbol for sending the reference signal is a reference signal symbol). A sequence sent on the 12 subcarriers of the preceding reference signal symbol is a subset of a set of sequences with a length of 12, where the set of sequences includes 30 sequences which satisfy at least one of the following conditions: different cyclic shifts of each sequence are orthogonal; a CM of each sequence does not exceed a first preset threshold (such as 0.69); a peak-to-average power ratio (PAPR) of each sequence does not exceed a second preset threshold; a cross-correlation between any two sequences does not exceed a third preset threshold; or a cross-correlation between any one sequence and a sequence with a length of 12 in an LTE system in the related art does not exceed a fourth preset threshold.

In an embodiment, without loss of generality, a sequence corresponding to an index of u (u = 0, 1, 2, ...., 29)

is $x_u(n) = \exp\left( j\frac{\pi.\varphi(n)}{4} \right)$, where a value of u and a value of $\varphi(n)$ are listed in the following table or cyclic shifts of each row listed in the following table.

In an embodiment, an index of a sequence selected by the terminal and a value of a cyclic shift of the sequence are determined according to a signaling indication of a base station.

Scheme 2

The terminal determines the HARQ-ACK information required to be fed back according to the received data. When the number of pieces of information sent by the terminal is not greater than 2, the terminal sends at least one sequence with a length of 12 on 12 subcarriers of K ($K \geq 1$) symbols. The sequence sent by the terminal is a subset of the set of sequences with a length of 12, where the set of sequences includes 30 sequences which satisfy at least one of the following conditions: different cyclic shifts of each sequence are orthogonal; the CM of each sequence does not exceed the first preset threshold (such as 0.69); the peak-to-average power ratio (PAPR) of each sequence does not exceed the second preset threshold; the cross-correlation between any two sequences does not exceed the third preset threshold; or a cross-correlation between any one sequence and a sequence with a length of 12 in an LTE system in the related art does not exceed a fourth preset threshold.

In an embodiment, without loss of generality, the sequence corresponding to the index of u (u = 0, 1, 2, ...., 29)

is $x_u(n) = \exp\left( j \frac{\pi.\varphi(n)}{4} \right)$ where the value of u and the value of $\varphi(n)$ are listed in the following table or cyclic shifts of each row listed in the following table.

In an embodiment, HARQ information sent by the terminal has a corresponding relation with the index of the sequence, the value of the cyclic shift of the sequence and frequency domain positions of the 12 subcarriers. For different HARQ information, at least one of the index of the sequence, the value of the cyclic shift of the sequence or the frequency domain positions of the 12 subcarriers corresponding to the different HARQ information is different.

Based on scheme 1 or scheme 2 described above, the sequence or subsets thereof are used as the reference signal or for directly carrying the HARQ information, which has advantages of a small cubic metric and high power amplification efficiency and the like. For example, when a neighboring cell uses a different sequence index, the solution can further reduce inter-cell interference and improves overall performance of a system.

Application embodiment one

FIG. 5 illustrates a signal sending method according to application embodiment one of the present application. As shown in FIG. 5, HARQ-ACK information is sent on 2 symbols, that is, K=2. A first symbol is used for sending a reference signal, and a second symbol is used for sending the HARQ-ACK information. When the number of pieces of HARQ-ACK information is not greater than 2 bits, 1 bit or 2 bits of HARQ-ACK information are modulated by using binary phase shift keying (BPSK) or quadrature phase shift keying (QPSK) to obtain a modulation symbol d, and then the modulation symbol d, after being multiplied by a sequence $x_u^S(n)$, is mapped onto the symbol for sending the HARQ-ACK information. A sequence $x_u^R(n)$ is directly mapped into the symbol for sending the reference signal. The sequence

$x_u^S(n)$ and the sequence $x_u^R(n)$ are sequences having a same sequence index of u, and may have a same cyclic shift or different cyclic shifts. In an embodiment, the sequence $x_u^S(n)$ and the sequence $x_u^R(n)$ are sequences in a

sequence set $\{x_u(n)\}$, where the sequence $x_u(n)$ satisfies:

$$x_u(n) = \exp\left( j \frac{\pi.\varphi(n)}{4} \right)$$

where u is the sequence index, $\varphi(n)$ is a predetermined parameter, and values of u and $\varphi(n)$ are listed in table 1 or cyclic shifts of each row in table 1.

Table 1

| u | $\varphi(0),...,\varphi(11)$ | | | | | | | | | | | |
|---|---|---|---|---|---|---|---|---|---|---|---|---|
| 0 | 1 | 3 | 1 | 1 | -1 | -3 | 1 | -3 | -3 | -1 | -1 | 1 |
| 1 | 1 | 1 | -1 | 3 | 3 | 3 | -1 | 1 | 1 | -1 | 3 | -1 |
| 2 | 1 | -1 | 1 | -3 | 1 | -1 | -3 | 3 | 3 | -3 | -1 | -1 |
| 3 | 1 | -3 | -1 | -3 | 1 | 1 | 3 | -1 | -1 | -3 | -1 | -1 |
| 4 | 1 | 3 | -1 | 3 | -1 | -1 | 1 | -1 | -1 | -1 | 3 | 3 |
| 5 | 1 | 3 | -1 | 1 | 1 | -3 | 1 | -1 | -1 | 3 | 3 | 3 |
| 6 | 1 | 1 | 1 | 1 | -1 | 3 | 3 | -1 | -1 | 3 | -1 | 3 |
| 7 | 1 | 3 | -1 | -1 | 3 | -1 | -3 | 3 | 3 | -3 | -3 | -3 |
| 8 | 1 | -3 | -1 | 1 | -1 | -3 | 1 | 1 | 1 | -1 | -3 | -1 |
| 9 | 1 | -3 | 3 | 1 | 1 | -3 | 1 | 3 | 3 | 3 | -3 | -1 |
| 10 | 1 | -3 | -1 | 1 | 1 | 3 | -1 | -3 | -3 | -3 | 3 | -1 |
| 11 | 1 | -3 | 3 | -3 | -3 | -3 | -1 | 3 | 3 | -1 | -1 | -3 |

(continued)

| u | $\varphi(0),...,\varphi(11)$ | | | | | | | | | | | |
|---|---|---|---|---|---|---|---|---|---|---|---|---|
| 12 | 1 | 3 | 1 | -3 | 1 | -1 | -1 | 3 | 3 | 1 | 1 | 3 |
| 13 | 1 | 3 | 3 | 1 | 3 | 3 | 1 | -1 | -1 | -3 | 1 | 3 |
| 14 | 1 | -3 | -3 | 1 | 1 | -3 | -3 | -3 | -3 | 1 | -3 | 1 |
| 15 | 1 | 3 | -3 | 1 | 3 | 1 | -1 | 1 | 1 | 1 | -3 | 3 |
| 16 | 1 | -3 | 1 | -3 | -3 | -3 | -3 | -3 | -3 | 1 | 1 | -3 |
| 17 | 1 | 3 | -3 | 1 | -3 | 1 | -1 | 3 | 3 | 1 | 1 | 1 |
| 18 | 1 | 3 | 1 | -3 | 1 | 1 | 3 | 1 | 1 | -3 | -3 | 3 |
| 19 | 1 | -3 | 1 | 3 | -3 | -3 | -1 | -3 | -3 | -3 | 3 | 1 |
| 20 | 1 | -3 | 3 | -1 | 1 | -3 | -3 | 1 | 1 | 1 | 1 | 1 |
| 21 | 1 | 1 | 3 | -1 | -1 | -1 | 3 | 1 | 1 | 3 | -1 | 3 |
| 22 | 1 | -3 | -3 | -3 | -1 | 1 | -1 | -1 | -1 | 3 | -1 | -3 |
| 23 | 1 | 1 | -3 | 3 | -3 | 1 | -1 | 1 | 1 | -1 | -1 | 1 |
| 24 | 1 | -1 | 3 | 3 | -3 | -3 | -3 | 3 | 3 | -1 | 1 | -3 |
| 25 | 1 | -1 | -1 | -3 | -1 | 3 | -3 | -1 | -1 | 1 | -1 | 3 |
| 26 | 1 | -1 | -3 | 1 | 3 | 1 | 3 | 3 | 3 | -3 | 1 | 1 |
| 27 | 1 | -3 | 3 | -1 | 3 | -3 | -1 | 1 | 1 | -1 | -3 | -3 |
| 28 | 1 | -1 | 1 | 1 | -1 | -3 | -3 | 1 | 1 | 3 | -1 | 3 |
| 29 | 1 | -1 | 3 | -3 | 1 | 1 | -3 | -1 | -1 | -1 | 1 | -1 |

In an embodiment, a cyclic shift of the sequence $x_u(n)$ is

$$y_u(n) = x_u(n) \cdot \exp\left( j\frac{2\pi\alpha}{M}n \right)$$

where $\alpha$ is a cyclic shift amount and $\alpha \in (0,1,2,...,11\}$.

The sequence $x_u(n)$ satisfies at least one of the following conditions: different cyclic shifts of each sequence are orthogonal, a cubic metric (CM) of each sequence does not exceed 0.69, or a cross-correlation between any two sequences does not exceed a predetermined threshold.

The cubic metric (CM) of the sequence is calculated according to the following formula:

$$CM = \frac{20\log_{10}\{rms\left|v_{norm}^3(t)\right|\} - 1.52}{1.56}dB \;;$$

where $rms(x) = \sqrt{\dfrac{(x'x)}{N}}$ and $v_{norm}(t) = \dfrac{|v(t)|}{rms\left[v(t)\right]}$.

A cross-correlation between two sequences is calculated by method 1 or method 2 below.

    Method 1: xcorr_coeffs = abs(NFFT * IFFT(seq1.* conj(seq2), NFFT) / length(seq1))
    Method 2: xcorr_coeffs = abs(sum((seq1.* conj(seq2))) / length(seq1)

NFFT denotes points of an operation of (I)FFT, conj denotes conjugation, length denotes a length, seq1 and seq2 are two sequences in frequency domain, abs denotes an absolute value, and sum denotes summation.

For method 2, correlation values of different cyclic shifts of any one sequence in table 1 with different cyclic shifts of another one sequence in table 1 are required to be calculated.

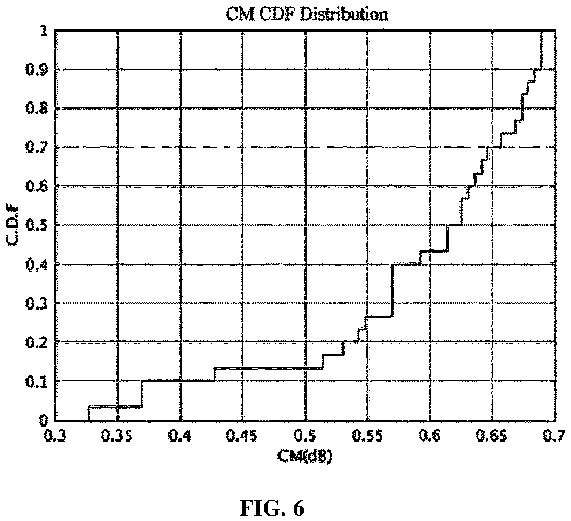

A probability density distribution of CM values of 30 sequences in table 1 is shown in FIG. 6. FIG. 6 is a diagram of a probability density distribution in an embodiment of the present application, where an ordinate CDF is a cumulative distribution function.

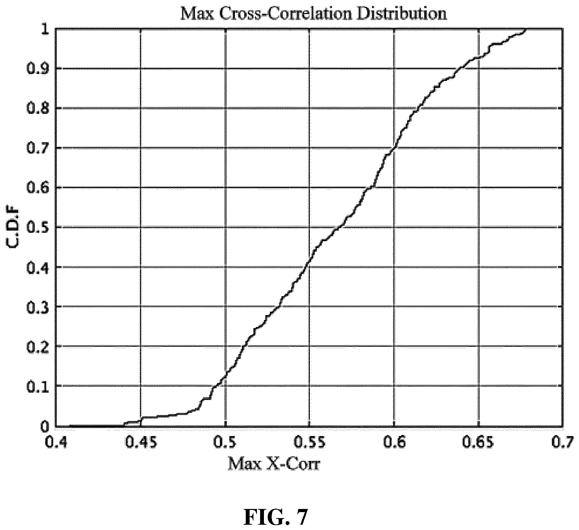

A probability density distribution of max cross-correlation values of the 30 sequences in table 1 is shown in FIG. 7. As can be seen from FIG. 7, the max cross-correlation values of the 30 sequences in table 1 do not exceed 0.68. A probability distribution of max cross-correlation values of sequences in FIG. 7 is calculated by the above-mentioned method 1. FIG. 7 is a diagram of a probability distribution of max cross-correlation values of sequences in an embodiment of the present application.

Application embodiment two

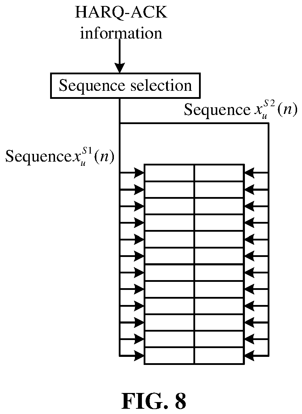

FIG. 8 illustrates an information sending method according to application embodiment two of the present application. As shown in FIG. 8, HARQ-ACK information is sent on 2 symbols, that is, K=2. When a number of pieces of HARQ-ACK information is not greater than 2 bits, one sequence $x_u^{S1}(n)$ or two sequences $x_u^{S1}(n)$ and $x_u^{S2}(n)$ are selected by a sequence selector for 1 bit or 2 bits of HARQ-ACK information. When the sequence selector outputs one sequence $x_u^{S1}(n)$, the sequence $x_u^{S2}(n)$ will be determined according to a predefinition manner with the sequence $x_u^{S1}(n)$. The sequences $x_u^{S1}(n)$ and $x_u^{S2}(n)$ are mapped to the 2 symbols, respectively. A set of candidate sequences for the sequences $x_u^{S1}(n)$ and $x_u^{S2}(n)$ is the same as that in application embodiment one and will not be repeated here.

Embodiment four

An embodiment of the present application further provides a storage medium. In this embodiment, the storage medium may be configured to store program codes for executing steps S1 and S2 described below.

In S1, hybrid automatic repeat request-acknowledgement (HARQ-ACK) information to be fed back is determined.

In S2, the HARQ-ACK information and a reference signal corresponding to the HARQ-ACK information are sent on L subcarriers of K symbols, where K≥2 and L≥12.

In this embodiment, the storage medium may include, but is not limited to, a USB flash disk, a read-only memory (ROM), a random access memory (RAM), a mobile hard disk, a magnetic disk, an optical disk or another medium capable of storing program codes.

In this embodiment, a processor performs, according to program codes stored in a storage medium, the following steps: determining hybrid automatic repeat request-acknowledgement (HARQ-ACK) information to be fed back; and sending the HARQ-ACK information and a reference signal corresponding to the HARQ-ACK information on L subcarriers of K symbols, where K≥2 and L≥12.

For specific examples in this embodiment, reference may be made to the examples described in the above-mentioned embodiments and optional implantation manners, and repetition will not be made in this embodiment.

Apparently, those skilled in the art should understand that various modules or steps described above of the present application may be implemented by a general-purpose computing apparatus, the various modules or steps may be concentrated on a single computing apparatus or distributed on a network composed of multiple computing apparatuses. In an embodiment, the various modules or steps may be implemented by program codes executable by the computing apparatus, so that the modules or steps may be stored in a storage apparatus for execution by the computing apparatus, and in some circumstances, the illustrated or described steps may be performed in sequences different from those described herein, or the module or steps may be made into various integrated circuit modules separately, or multiple modules or steps therein may be made into a single integrated circuit module for implementation. In this way, the present application is not limited to any particular combination of hardware and software.

**Claims**

1. A signal sending method, comprising:

   determining hybrid automatic repeat request-acknowledgement, HARQ-ACK, information to be fed back; and

sending the HARQ-ACK information and a reference signal corresponding to the HARQ-ACK information on L subcarriers of K symbols, wherein K≥2 and L≥12.

2. The method of claim 1, wherein sending the reference signal corresponding to the HARQ-ACK information on the L subcarriers of the K symbols comprises:
sending the reference signal corresponding to the HARQ-ACK information on M subcarriers of at least one of the K symbols, wherein M≥12.

3. The method of claim 1, wherein the K symbols comprise a first symbol for sending the reference signal and a second symbol for sending the HARQ-ACK information.

4. The method of claim 2, wherein sending the reference signal corresponding to the HARQ-ACK information on the M subcarriers of at least one of the K symbols comprises:
sending, by a sequence with a length of M, the reference signal corresponding to the HARQ-ACK information on the M subcarriers of at least one of the K symbols, wherein M values of the sequence are mapped onto the M subcarriers.

5. The method of claim 2, wherein M=12.

6. The method of claim 4, wherein the sequence is a subset of a specified sequence set, wherein sequences in the specified sequence set satisfy at least one of following conditions:

different cyclic shifts of each sequence are orthogonal;
a cubic metric, CM, of each sequence does not exceed a first preset threshold;
a peak-to-average power ratio, PAPR, of each sequence does not exceed a second preset threshold;
a cross-correlation between any two sequences does not exceed a third preset threshold; or
a cross-correlation between any one sequence and a sequence with a length of 12 in a Long-Term Evolution, LTE, system does not exceed a fourth preset threshold.

7. The method of claim 4, wherein a sequence $x_u(n)$ satisfies a following condition:

$$x_u(n) = \exp\left( j \frac{\pi.\varphi(n)}{4} \right)$$

where u is a sequence index, u is an integer and u∈ {0,1,2.... 29}, $\varphi(n)$ is an element value of the sequence, n is an element index, n=0, 1, 2, ..., 11, and a value of u has a corresponding relation with a value of $\varphi(n)$.

8. The method of claim 7, wherein the value of u and the value of $\varphi(n)$ are values listed in any one of tables 1 to 3 or are cyclic shifts of each row listed in any one of tables 1 to 3:

Table 1

| u | $\varphi(n)$ | | | | | | | | | | | |
|---|---|---|---|---|---|---|---|---|---|---|---|---|
| 0 | 1 | 1 | -3 | 3 | -3 | -1 | 1 | -3 | -3 | -3 | 3 | -3 |
| 1 | 1 | 1 | -3 | 3 | -1 | -3 | -1 | -3 | -3 | 3 | -3 | -1 |
| 2 | 1 | -3 | 3 | 1 | -1 | 1 | 3 | 1 | 1 | 1 | -3 | -1 |
| 3 | 1 | -3 | 3 | 3 | -1 | -1 | 3 | -3 | -3 | 3 | -3 | 3 |
| 4 | 1 | 3 | 3 | 1 | 3 | -3 | 3 | 1 | 1 | 3 | -1 | -3 |
| 5 | 1 | -3 | 3 | -1 | 1 | -3 | -3 | 3 | 3 | 3 | 3 | -3 |
| 6 | 1 | 1 | 3 | 3 | -1 | -3 | -3 | 3 | 3 | -3 | 1 | -3 |
| 7 | 1 | -3 | -1 | -3 | 3 | -1 | -3 | -1 | -1 | -1 | 3 | -3 |
| 8 | 1 | 3 | -3 | -1 | -3 | 1 | -1 | -3 | -3 | 3 | -3 | 3 |
| 9 | 1 | -1 | -1 | -1 | 1 | -3 | 3 | -1 | -1 | 3 | -3 | 1 |

(continued)

| u | φ(n) | | | | | | | | | | | |
|---|---|---|---|---|---|---|---|---|---|---|---|---|
| 10 | 1 | -1 | 3 | -3 | -3 | -3 | 1 | -3 | -3 | 3 | 3 | -1 |
| 11 | 1 | -1 | 1 | 1 | 3 | -3 | 1 | -3 | -3 | 3 | 3 | 1 |
| 12 | 1 | -1 | 1 | 1 | -1 | 1 | -3 | 3 | 3 | -1 | -1 | 1 |
| 13 | 1 | -3 | -1 | -3 | -1 | -1 | -3 | 1 | 1 | 3 | -1 | -1 |
| 14 | 1 | -3 | 3 | -1 | 1 | -3 | -1 | -1 | -1 | -1 | -3 | 3 |
| 15 | 1 | -1 | -3 | 1 | 3 | 1 | 3 | 3 | 3 | -1 | 1 | 3 |
| 16 | 1 | -3 | -1 | 3 | 3 | 1 | 1 | 3 | 3 | -1 | -3 | 1 |
| 17 | 1 | -3 | 1 | 3 | -3 | -3 | 3 | 3 | 3 | 1 | -1 | 3 |
| 18 | 1 | 3 | -3 | 3 | 1 | -3 | -3 | -3 | -3 | 1 | 3 | 1 |
| 19 | 1 | -1 | -3 | -3 | 1 | 1 | 3 | 1 | 1 | 3 | -1 | 3 |
| 20 | 1 | 3 | -3 | -1 | 1 | -1 | 3 | 3 | 3 | 3 | 1 | -3 |
| 21 | 1 | -1 | 3 | -1 | 3 | 3 | 1 | 1 | 1 | 3 | -3 | -1 |
| 22 | 1 | 1 | 1 | -3 | -3 | 3 | -1 | 3 | 3 | -3 | 1 | -3 |
| 23 | 1 | 3 | -1 | 3 | 1 | -3 | -3 | 1 | 1 | 1 | 1 | -3 |
| 24 | 1 | 3 | 1 | 3 | -1 | -3 | 3 | -1 | -1 | 3 | -3 | -3 |
| 25 | 1 | -3 | 3 | -3 | -3 | -3 | 3 | 1 | 1 | -3 | -1 | 1 |
| 26 | 1 | -3 | 3 | 3 | -1 | 3 | -1 | 1 | 1 | -3 | -1 | -1 |
| 27 | 1 | 1 | -3 | -3 | -1 | -1 | -3 | -1 | -1 | 3 | -1 | 3 |
| 28 | 1 | 3 | 3 | -1 | 1 | -1 | 1 | -1 | -1 | 3 | 1 | 1 |
| 29 | 1 | -3 | 3 | -1 | -3 | -1 | 1 | 1 | 1 | -1 | -1 | 3 |

Table 2

| u | φ(n) | | | | | | | | | | | |
|---|---|---|---|---|---|---|---|---|---|---|---|---|
| 0 | 1 | -3 | -1 | -1 | 1 | -3 | -3 | -3 | -3 | 1 | -1 | -1 |
| 1 | 1 | 3 | -3 | -3 | -3 | -1 | 3 | -1 | -1 | -3 | 3 | -1 |
| 2 | 1 | 3 | -3 | -1 | 3 | 1 | -1 | -3 | -3 | 3 | -3 | 3 |
| 3 | 1 | -3 | 3 | -1 | 3 | 3 | 3 | 1 | 1 | -1 | 1 | 3 |
| 4 | 1 | 3 | 1 | 3 | -1 | 1 | 3 | -3 | -3 | 3 | 1 | -1 |
| 5 | 1 | 3 | -3 | 1 | -1 | 1 | -1 | -1 | -1 | 3 | 1 | 1 |
| 6 | 1 | -1 | -1 | -3 | -3 | -1 | 3 | -1 | -1 | 1 | 1 | 3 |
| 7 | 1 | -3 | -1 | 3 | 3 | 3 | 3 | 3 | 3 | -1 | -3 | 1 |
| 8 | 1 | 3 | -3 | -1 | 3 | 1 | 3 | 1 | 1 | -1 | 3 | 1 |
| 9 | 1 | -1 | -3 | -3 | -1 | -3 | 1 | 3 | 3 | -1 | 3 | -3 |
| 10 | 1 | -3 | -1 | 1 | -1 | -3 | 1 | 1 | 1 | -1 | -3 | -1 |
| 11 | 1 | 1 | 3 | -3 | 3 | 3 | -3 | 1 | 1 | -1 | 3 | -1 |
| 12 | 1 | 1 | 1 | 1 | -1 | 1 | -3 | 3 | 3 | -1 | -1 | 3 |
| 13 | 1 | -3 | 1 | -1 | -3 | 1 | 1 | -1 | -1 | -1 | 1 | 3 |

(continued)

| u | $\varphi(n)$ | | | | | | | | | | | |
|---|---|---|---|---|---|---|---|---|---|---|---|---|
| 14 | 1 | -3 | -1 | 3 | -1 | -1 | -1 | 1 | 1 | 3 | 1 | -1 |
| 15 | 1 | -3 | 1 | -1 | -1 | 3 | -3 | 1 | 1 | 3 | 3 | 3 |
| 16 | 1 | -3 | -3 | -3 | -1 | 1 | 3 | 1 | 1 | 1 | -3 | 1 |
| 17 | 1 | -3 | 3 | 1 | 3 | -3 | 1 | 1 | 1 | 3 | -3 | 3 |
| 18 | 1 | 3 | -3 | -1 | -1 | -3 | 1 | -1 | -1 | -1 | -3 | 1 |
| 19 | 1 | -1 | -3 | 3 | 3 | -3 | 1 | 3 | 3 | 3 | -3 | 1 |
| 20 | 1 | 1 | -1 | -1 | -1 | 3 | 1 | -3 | -3 | 1 | -3 | -1 |
| 21 | 1 | -3 | 3 | -3 | -1 | -1 | 3 | -1 | -1 | -3 | -3 | -3 |
| 22 | 1 | -1 | -3 | -1 | 3 | -3 | -1 | 1 | 1 | 1 | 3 | 1 |
| 23 | 1 | 3 | 1 | 3 | -3 | -1 | -1 | -3 | -3 | 3 | -1 | -3 |
| 24 | 1 | 3 | -1 | -1 | 3 | -1 | -3 | 3 | 3 | -3 | -3 | -3 |
| 25 | 1 | -3 | -1 | 3 | -1 | 3 | 1 | -1 | -1 | -1 | 1 | 1 |
| 26 | 1 | -3 | 3 | -1 | 1 | -3 | -3 | 3 | 3 | 3 | 3 | -3 |
| 27 | 1 | -3 | -3 | -3 | 3 | 1 | -1 | 1 | 1 | 1 | -3 | 1 |
| 28 | 1 | -3 | -3 | 3 | -1 | -1 | 1 | 3 | 3 | 1 | 3 | 1 |
| 29 | 1 | 3 | -3 | 3 | -1 | -3 | 3 | 1 | 1 | 1 | -1 | 1 |

Table 3

| u | $\varphi(n)$ | | | | | | | | | | | |
|---|---|---|---|---|---|---|---|---|---|---|---|---|
| 0 | 1 | -1 | 3 | 1 | 1 | -1 | -1 | -1 | 1 | 3 | -3 | 1 |
| 1 | -1 | -1 | -1 | -1 | 1 | -3 | -1 | 3 | 3 | -1 | -3 | 1 |
| 2 | 1 | -1 | -1 | -3 | -3 | 1 | -3 | 3 | 3 | -3 | -3 | -1 |
| 3 | 1 | 3 | -3 | 1 | -1 | 1 | -1 | -1 | -1 | 3 | 1 | 1 |
| 4 | -3 | 1 | 3 | -1 | -1 | -3 | -3 | -1 | -1 | 3 | 1 | -3 |
| 5 | -1 | 1 | 1 | -1 | 1 | 3 | 3 | -1 | -1 | -3 | 1 | -3 |
| 6 | -3 | -3 | -1 | 3 | 3 | 3 | -3 | 3 | -3 | 1 | -1 | -3 |
| 7 | -3 | 3 | -3 | 3 | 3 | -3 | -1 | -1 | 3 | 3 | 1 | -3 |
| 8 | -3 | -1 | -3 | -1 | -1 | -3 | 3 | 3 | -1 | -1 | 1 | -3 |
| 9 | -3 | 3 | 3 | 3 | -1 | -3 | -3 | -1 | -3 | 1 | 3 | -3 |
| 10 | 1 | 3 | -3 | 1 | 3 | 3 | 3 | 1 | -1 | 1 | -1 | 3 |
| 11 | -1 | -3 | 3 | -1 | -3 | -3 | -3 | -1 | 1 | -1 | 1 | -3 |
| 12 | 3 | 1 | 3 | 1 | 3 | -3 | -1 | 1 | 3 | 1 | -1 | -3 |
| 13 | -3 | -3 | 3 | 3 | 3 | -3 | -1 | 1 | -3 | 3 | 1 | -3 |
| 14 | -3 | -1 | 1 | -3 | 1 | 3 | 3 | 3 | -1 | -3 | 3 | 3 |
| 15 | -3 | -3 | 3 | 1 | -3 | -3 | -3 | -1 | 3 | -1 | 1 | 3 |
| 16 | -1 | 1 | 3 | -3 | 1 | -1 | 1 | -1 | -1 | -3 | 1 | -1 |
| 17 | -3 | -1 | -1 | 1 | 3 | 1 | 1 | -1 | 1 | -1 | -3 | 1 |

(continued)

| u | $\varphi(n)$ | | | | | | | | | | | |
|---|---|---|---|---|---|---|---|---|---|---|---|---|
| 18 | -3 | -1 | 3 | -3 | -3 | -1 | -3 | 1 | -1 | -3 | 3 | 3 |
| 19 | -3 | -3 | 3 | -3 | -1 | 3 | 3 | 3 | -1 | -3 | 1 | -3 |
| 20 | -3 | 1 | -1 | -1 | 3 | 3 | -3 | -1 | -1 | -3 | -1 | -3 |
| 21 | -3 | 1 | 3 | 3 | -1 | -1 | -3 | 3 | 3 | -3 | 3 | -3 |
| 22 | -3 | -1 | -1 | -3 | -3 | -1 | -3 | 3 | 1 | 3 | -1 | -3 |
| 23 | -3 | -1 | 3 | 1 | -3 | -1 | -3 | 3 | 1 | 3 | 3 | 1 |
| 24 | -3 | 3 | 3 | 1 | -3 | 3 | -1 | 1 | 3 | -3 | 3 | -3 |
| 25 | 3 | -1 | -3 | 3 | -3 | -1 | 3 | 3 | 3 | -3 | -1 | -3 |
| 26 | 1 | -1 | 3 | -1 | -1 | -1 | -3 | -1 | 1 | 1 | 1 | -3 |
| 27 | -3 | 3 | 1 | -3 | 1 | 3 | -1 | -1 | 1 | 3 | 3 | 3 |
| 28 | -3 | 3 | -3 | 3 | -3 | -3 | 3 | -1 | -1 | 1 | 3 | -3 |
| 29 | -3 | 3 | 1 | -1 | 3 | 3 | -3 | 1 | -1 | 1 | -1 | 1 |

9. The method of claim 8, wherein a cyclic shift of the sequence is

$$y_u(n,\alpha) = x_u(n) \cdot \exp\left( j\frac{2\pi\alpha}{M}n \right)$$

where $\alpha$ denotes a cyclic shift amount and $\alpha \in \{0,1,2,...,11\}$, and M is a length of the sequence.

10. The method of claim 8, wherein the value of u and a value of the cyclic shift of the sequence are determined according to a signaling indication of a base station.

11. A signal sending method, comprising:

determining hybrid automatic repeat request-acknowledgement, HARQ-ACK, information to be fed back; and in response to a number of pieces of HARQ-ACK information being not greater than 2, sending at least one sequence with a length of M on M subcarriers of K symbols, wherein K≥1, M≥12, and M values of the sequence are mapped onto the M subcarriers.

12. The method of claim 11, wherein M=12.

13. The method of claim 11, wherein the sequence is a subset of a specified sequence set, wherein sequences in the specified sequence set satisfy at least one of following conditions:

different cyclic shifts of each sequence are orthogonal;
a cubic metric, CM, of each sequence does not exceed a first preset threshold;
a peak-to-average power ratio, PAPR, of each sequence does not exceed a second preset threshold;
a cross-correlation between any two sequences does not exceed a third preset threshold; or
a cross-correlation between any one sequence and a sequence with a length of 12 in a Long-Term Evolution, LTE, system does not exceed a fourth preset threshold.

14. The method of claim 10, wherein a sequence $x_u(n)$ satisfies a following condition:

$$x_u(n) = \exp\left( j\frac{\pi . \varphi(n)}{4} \right)$$

where u is a sequence index, u is an integer and u∈{0,1,2,...29}, $\varphi(n)$ is an element value of the sequence, n is an element index, n=0, 1, 2, ..., 11, and a value of u has a corresponding relation with a value of $\varphi(n)$.

15. The method of claim 14, wherein the value of u and the value of $\varphi(n)$ are values listed in any one of tables 1 to 3 or are cyclic shifts of each row listed in any one of tables 1 to 3:

Table 1

| u | $\varphi(n)$ | | | | | | | | | | | |
|---|---|---|---|---|---|---|---|---|---|---|---|---|
| 0 | 1 | 1 | -3 | 3 | -3 | -1 | 1 | -3 | -3 | -3 | 3 | -3 |
| 1 | 1 | 1 | -3 | 3 | -1 | -3 | -1 | -3 | -3 | 3 | -3 | -1 |
| 2 | 1 | -3 | 3 | 1 | -1 | 1 | 3 | 1 | 1 | 1 | -3 | -1 |
| 3 | 1 | -3 | 3 | 3 | -1 | -1 | 3 | -3 | -3 | 3 | -3 | 3 |
| 4 | 1 | 3 | 3 | 1 | 3 | -3 | 3 | 1 | 1 | 3 | -1 | -3 |
| 5 | 1 | -3 | 3 | -1 | 1 | -3 | -3 | 3 | 3 | 3 | 3 | -3 |
| 6 | 1 | 1 | 3 | 3 | -1 | -3 | -3 | 3 | 3 | -3 | 1 | -3 |
| 7 | 1 | -3 | -1 | -3 | 3 | -1 | -3 | -1 | -1 | -1 | 3 | -3 |
| 8 | 1 | 3 | -3 | -1 | -3 | 1 | -1 | -3 | -3 | 3 | -3 | 3 |
| 9 | 1 | -1 | -1 | -1 | 1 | -3 | 3 | -1 | -1 | 3 | -3 | 1 |
| 10 | 1 | -1 | 3 | -3 | -3 | -3 | 1 | -3 | -3 | 3 | 3 | -1 |
| 11 | 1 | -1 | 1 | 1 | 3 | -3 | 1 | -3 | -3 | 3 | 3 | 1 |
| 12 | 1 | -1 | 1 | 1 | -1 | 1 | -3 | 3 | 3 | -1 | -1 | 1 |
| 13 | 1 | -3 | -1 | -3 | -1 | -1 | -3 | 1 | 1 | 3 | -1 | -1 |
| 14 | 1 | -3 | 3 | -1 | 1 | -3 | -1 | -1 | -1 | -1 | -3 | 3 |
| 15 | 1 | -1 | -3 | 1 | 3 | 1 | 3 | 3 | 3 | -1 | 1 | 3 |
| 16 | 1 | -3 | -1 | 3 | 3 | 1 | 1 | 3 | 3 | -1 | -3 | 1 |
| 17 | 1 | -3 | 1 | 3 | -3 | -3 | 3 | 3 | 3 | 1 | -1 | 3 |
| 18 | 1 | 3 | -3 | 3 | 1 | -3 | -3 | -3 | -3 | 1 | 3 | 1 |
| 19 | 1 | -1 | -3 | -3 | 1 | 1 | 3 | 1 | 1 | 3 | -1 | 3 |
| 20 | 1 | 3 | -3 | -1 | 1 | -1 | 3 | 3 | 3 | 3 | 1 | -3 |
| 21 | 1 | -1 | 3 | -1 | 3 | 3 | 1 | 1 | 1 | 3 | -3 | -1 |
| 22 | 1 | 1 | 1 | -3 | -3 | 3 | -1 | 3 | 3 | -3 | 1 | -3 |
| 23 | 1 | 3 | -1 | 3 | 1 | -3 | -3 | 1 | 1 | 1 | 1 | -3 |
| 24 | 1 | 3 | 1 | 3 | -1 | -3 | 3 | -1 | -1 | 3 | -3 | -3 |
| 25 | 1 | -3 | 3 | -3 | -3 | -3 | 3 | 1 | 1 | -3 | -1 | 1 |
| 26 | 1 | -3 | 3 | 3 | -1 | 3 | -1 | 1 | 1 | -3 | -1 | -1 |
| 27 | 1 | 1 | -3 | -3 | -1 | -1 | -3 | -1 | -1 | 3 | -1 | 3 |
| 28 | 1 | 3 | 3 | -1 | 1 | -1 | 1 | -1 | -1 | 3 | 1 | 1 |
| 29 | 1 | -3 | 3 | -1 | -3 | -1 | 1 | 1 | 1 | -1 | -1 | 3 |

Table 2

| u | φ(n) | | | | | | | | | | | |
|---|---|---|---|---|---|---|---|---|---|---|---|---|
| 0 | 1 | -3 | -1 | -1 | 1 | -3 | -3 | -3 | -3 | 1 | -1 | -1 |
| 1 | 1 | 3 | -3 | -3 | -3 | -1 | 3 | -1 | -1 | -3 | 3 | -1 |
| 2 | 1 | 3 | -3 | -1 | 3 | 1 | -1 | -3 | -3 | 3 | -3 | 3 |
| 3 | 1 | -3 | 3 | -1 | 3 | 3 | 3 | 1 | 1 | -1 | 1 | 3 |
| 4 | 1 | 3 | 1 | 3 | -1 | 1 | 3 | -3 | -3 | 3 | 1 | -1 |
| 5 | 1 | 3 | -3 | 1 | -1 | 1 | -1 | -1 | -1 | 3 | 1 | 1 |
| 6 | 1 | -1 | -1 | -3 | -3 | -1 | 3 | -1 | -1 | 1 | 1 | 3 |
| 7 | 1 | -3 | -1 | 3 | 3 | 3 | 3 | 3 | 3 | -1 | -3 | 1 |
| 8 | 1 | 3 | -3 | -1 | 3 | 1 | 3 | 1 | 1 | -1 | 3 | 1 |
| 9 | 1 | -1 | -3 | -3 | -1 | -3 | 1 | 3 | 3 | -1 | 3 | -3 |
| 10 | 1 | -3 | -1 | 1 | -1 | -3 | 1 | 1 | 1 | -1 | -3 | -1 |
| 11 | 1 | 1 | 3 | -3 | 3 | 3 | -3 | 1 | 1 | -1 | 3 | -1 |
| 12 | 1 | 1 | 1 | 1 | -1 | 1 | -3 | 3 | 3 | -1 | -1 | 3 |
| 13 | 1 | -3 | 1 | -1 | -3 | 1 | 1 | -1 | -1 | -1 | 1 | 3 |
| 14 | 1 | -3 | -1 | 3 | -1 | -1 | -1 | 1 | 1 | 3 | 1 | -1 |
| 15 | 1 | -3 | 1 | -1 | -1 | 3 | -3 | 1 | 1 | 3 | 3 | 3 |
| 16 | 1 | -3 | -3 | -3 | -1 | 1 | 3 | 1 | 1 | 1 | -3 | 1 |
| 17 | 1 | -3 | 3 | 1 | 3 | -3 | 1 | 1 | 1 | 3 | -3 | 3 |
| 18 | 1 | 3 | -3 | -1 | -1 | -3 | 1 | -1 | -1 | -1 | -3 | 1 |
| 19 | 1 | -1 | -3 | 3 | 3 | -3 | 1 | 3 | 3 | 3 | -3 | 1 |
| 20 | 1 | 1 | -1 | -1 | -1 | 3 | 1 | -3 | -3 | 1 | -3 | -1 |
| 21 | 1 | -3 | 3 | -3 | -1 | -1 | 3 | -1 | -1 | -3 | -3 | -3 |
| 22 | 1 | -1 | -3 | -1 | 3 | -3 | -1 | 1 | 1 | 1 | 3 | 1 |
| 23 | 1 | 3 | 1 | 3 | -3 | -1 | -1 | -3 | -3 | 3 | -1 | -3 |
| 24 | 1 | 3 | -1 | -1 | 3 | -1 | -3 | 3 | 3 | -3 | -3 | -3 |
| 25 | 1 | -3 | -1 | 3 | -1 | 3 | 1 | -1 | -1 | -1 | 1 | 1 |
| 26 | 1 | -3 | 3 | -1 | 1 | -3 | -3 | 3 | 3 | 3 | 3 | -3 |
| 27 | 1 | -3 | -3 | -3 | 3 | 1 | -1 | 1 | 1 | 1 | -3 | 1 |
| 28 | 1 | -3 | -3 | 3 | -1 | -1 | 1 | 3 | 3 | 1 | 3 | 1 |
| 29 | 1 | 3 | -3 | 3 | -1 | -3 | 3 | 1 | 1 | 1 | -1 | 1 |

Table 3

| u | φ(n) | | | | | | | | | | | |
|---|---|---|---|---|---|---|---|---|---|---|---|---|
| 0 | 1 | -1 | 3 | 1 | 1 | -1 | -1 | -1 | 1 | 3 | -3 | 1 |
| 1 | -1 | -1 | -1 | -1 | 1 | -3 | -1 | 3 | 3 | -1 | -3 | 1 |
| 2 | 1 | -1 | -1 | -3 | -3 | 1 | -3 | 3 | 3 | -3 | -3 | -1 |
| 3 | 1 | 3 | -3 | 1 | -1 | 1 | -1 | -1 | -1 | 3 | 1 | 1 |

(continued)

| u | $\varphi(n)$ | | | | | | | | | | | |
|---|---|---|---|---|---|---|---|---|---|---|---|---|
| 4 | -3 | 1 | 3 | -1 | -1 | -3 | -3 | -1 | -1 | 3 | 1 | -3 |
| 5 | -1 | 1 | 1 | -1 | 1 | 3 | 3 | -1 | -1 | -3 | 1 | -3 |
| 6 | -3 | -3 | -1 | 3 | 3 | 3 | -3 | 3 | -3 | 1 | -1 | -3 |
| 7 | -3 | 3 | -3 | 3 | 3 | -3 | -1 | -1 | 3 | 3 | 1 | -3 |
| 8 | -3 | -1 | -3 | -1 | -1 | -3 | 3 | 3 | -1 | -1 | 1 | -3 |
| 9 | -3 | 3 | 3 | 3 | -1 | -3 | -3 | -1 | -3 | 1 | 3 | -3 |
| 10 | 1 | 3 | -3 | 1 | 3 | 3 | 3 | 1 | -1 | 1 | -1 | 3 |
| 11 | -1 | -3 | 3 | -1 | -3 | -3 | -3 | -1 | 1 | -1 | 1 | -3 |
| 12 | 3 | 1 | 3 | 1 | 3 | -3 | -1 | 1 | 3 | 1 | -1 | -3 |
| 13 | -3 | -3 | 3 | 3 | 3 | -3 | -1 | 1 | -3 | 3 | 1 | -3 |
| 14 | -3 | -1 | 1 | -3 | 1 | 3 | 3 | 3 | -1 | -3 | 3 | 3 |
| 15 | -3 | -3 | 3 | 1 | -3 | -3 | -3 | -1 | 3 | -1 | 1 | 3 |
| 16 | -1 | 1 | 3 | -3 | 1 | -1 | 1 | -1 | -1 | -3 | 1 | -1 |
| 17 | -3 | -1 | -1 | 1 | 3 | 1 | 1 | -1 | 1 | -1 | -3 | 1 |
| 18 | -3 | -1 | 3 | -3 | -3 | -1 | -3 | 1 | -1 | -3 | 3 | 3 |
| 19 | -3 | -3 | 3 | -3 | -1 | 3 | 3 | 3 | -1 | -3 | 1 | -3 |
| 20 | -3 | 1 | -1 | -1 | 3 | 3 | -3 | -1 | -1 | -3 | -1 | -3 |
| 21 | -3 | 1 | 3 | 3 | -1 | -1 | -3 | 3 | 3 | -3 | 3 | -3 |
| 22 | -3 | -1 | -1 | -3 | -3 | -1 | -3 | 3 | 1 | 3 | -1 | -3 |
| 23 | -3 | -1 | 3 | 1 | -3 | -1 | -3 | 3 | 1 | 3 | 3 | 1 |
| 24 | -3 | 3 | 3 | 1 | -3 | 3 | -1 | 1 | 3 | -3 | 3 | -3 |
| 25 | 3 | -1 | -3 | 3 | -3 | -1 | 3 | 3 | 3 | -3 | -1 | -3 |
| 26 | 1 | -1 | 3 | -1 | -1 | -1 | -3 | -1 | 1 | 1 | 1 | -3 |
| 27 | -3 | 3 | 1 | -3 | 1 | 3 | -1 | -1 | 1 | 3 | 3 | 3 |
| 28 | -3 | 3 | -3 | 3 | -3 | -3 | 3 | -1 | -1 | 1 | 3 | -3 |
| 29 | -3 | 3 | 1 | -1 | 3 | 3 | -3 | 1 | -1 | 1 | -1 | 1 |

16. The method of claim 15, wherein a cyclic shift of the sequence is

$$y_u(n,\alpha) = x_u(n) \cdot \exp\left( j\frac{2\pi\alpha}{M} n \right)$$

where $\alpha$ denotes a cyclic shift amount and $\alpha \in \{0,1,2,...,11\}$.

17. The method of claim 11, wherein the HARQ-ACK information has a corresponding relation with at least one of: an index of the sequence, a value of a cyclic shift of the sequence, or frequency domain positions of the M subcarriers.

18. A signal sending apparatus, comprising:

a determining module, which is configured to determine hybrid automatic repeat request-acknowledgement, HARQ-ACK, information to be fed back; and
a sending module, which is configured to send the HARQ-ACK information and a reference signal corresponding to the HARQ-ACK information on L subcarriers of K symbols, wherein K≥2 and L≥12.

19. A signal sending apparatus, comprising:

    a determining module, which is configured to determine hybrid automatic repeat request-acknowledgement, HARQ-ACK, information to be fed back; and
    a sending module, which is configured to: in response to a number of pieces of HARQ-ACK information being not greater than 2, send at least one sequence with a length of M on M subcarriers of K symbols, wherein K≥1, M≥12, and M values of the sequence are mapped onto the M subcarriers.

20. A storage medium, comprising stored programs, wherein the programs, when executed, perform the method of any one of claims 1 to 17.

21. A processor, which is configured to execute programs which, when executed on the processor, perform the method of any one of claims 1 to 17.

Determine hybrid automatic repeat request-
acknowledgement (HARQ-ACK) information to be fed ⟋ S102
back

Send the HARQ-ACK information and a reference
signal corresponding to the HARQ-ACK information ⟋ S104
on L subcarriers of K symbols

**FIG. 1**

Determine hybrid automatic repeat request-
acknowledgement (HARQ-ACK) information to be fed ⟋ S202
back

In response to a number of pieces of HARQ-ACK
information being not greater than 2, send one or more ⟋ S204
sequences with a length of M on M subcarriers of K
symbols

**FIG. 2**

Determining module ⟋ 30

Sending module ⟋ 32

**FIG. 3**

Determining module — 40

Sending module — 42

**FIG. 4**

HARQ-ACK
information

↓

Modulation

d

Sequence $x_u^R(n)$ — ⊗ ← Sequence $x_u^S(n)$

▨ Symbol for sending a reference signal

☐ Symbol for sending the HARQ-ACK information

**FIG. 5**

**FIG. 6**

**FIG. 7**

HARQ-ACK
information

Sequence selection

Sequence $x_u^{S2}(n)$

Sequence $x_u^{S1}(n)$

**FIG. 8**

## INTERNATIONAL SEARCH REPORT

| International application No. |
|---|
| **PCT/CN2018/109875** |

| **A.** | **CLASSIFICATION OF SUBJECT MATTER** |
|---|---|

H04L 27/26(2006.01)i; H04W 72/04(2009.01)i

According to International Patent Classification (IPC) or to both national classification and IPC

| **B.** | **FIELDS SEARCHED** |
|---|---|

Minimum documentation searched (classification system followed by classification symbols)

H04L; H04B; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC: 子载波, 符号, 混合, 重传, 确认, 上行, 上链, 参考, 解调, 时频, 序列, HARQ, ACK, symbol, carrier, uplink, reference, demodulation

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 106961408 A (ZTE CORPORATION) 18 July 2017 (2017-07-18) description, paragraphs [0118]-[0208], and figures 1-8, 20, and 21 | 1-21 |
| A | CN 101325571 A (ZTE CORPORATION) 17 December 2008 (2008-12-17) entire document | 1-21 |
| A | CN 107040358 A (KT INC.) 11 August 2017 (2017-08-11) entire document | 1-21 |
| A | CN 106961744 A (ZTE CORPORATION) 18 July 2017 (2017-07-18) entire document | 1-21 |
| A | CN 101222304 A (BEIJING SAMSUNG TELECOM R&D CENTER ET AL.) 16 July 2008 (2008-07-16) entire document | 1-21 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 November 2018** | **04 January 2019** |

| Name and mailing address of the ISA/CN | Authorized officer |
|---|---|
| **State Intellectual Property Office of the P. R. China (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/109875**

| Patent document cited in search report | | | Publication date (day/month/year) | Patent family member(s) | | | Publication date (day/month/year) |
|---|---|---|---|---|---|---|---|
| CN | 106961408 | A | 18 July 2017 | US | 2018278396 | A1 | 27 September 2018 |
| | | | | WO | 2017121415 | A1 | 20 July 2017 |
| CN | 101325571 | A | 17 December 2008 | CN | 101325571 | B | 06 June 2012 |
| CN | 107040358 | A | 11 August 2017 | US | 2017230961 | A1 | 10 August 2017 |
| | | | | KR | 20170093679 | A | 16 August 2017 |
| CN | 106961744 | A | 18 July 2017 | EP | 3379753 | A1 | 26 September 2018 |
| | | | | WO | 2017121416 | A1 | 20 July 2017 |
| CN | 101222304 | A | 16 July 2008 | CN | 101222304 | B | 06 February 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710942526